# EUROPEAN PATENT APPLICATION

(11) **EP 4 293 159 A1**
(43) Date of publication of application: **20.12.2023**
(21) Application number: 22178648.6
(22) Date of filing: 13.06.2022
(51) Int. Cl.: D21H 11/18, C09J 7/21, D21H 25/04, D21H 27/00, D21H 27/06, D21H 27/30, D21H 19/32, D21H 19/82, D21H 19/84

(54) **FIBER-BASED TRANSPARENT TAPE, METHOD FOR PRODUCING IT AND USES THEREOF**

(71) Applicant: Ahlstrom Oyj, 00100 Helsinki (FI)
(72) Inventor: GISLE, Antoine, 38120 Saint-Égrève (FR); FERRARI, Sebastien, 69970 Marennes (FR); LAVOUE, Guillaume, 80000 Amiens (FR)
(74) Representative: Laine IP Oy

(57) **Abstract**

The present invention relates to the field of adhesive tape industry and in particular to adhesive tape base papers and adhesive tapes for packaging and office/stationery use. According to one particular embodiment, the adhesive tapes of the invention may be based on a transparent paper, wherein one side of the paper is coated with a release agent and the other side is optionally coated with a primer coating. The invention also relates to a method of producing said adhesive tape base papers and adhesive tapes and to the use thereof in packaging or as office/stationery tapes.

## Description

### FIELD

The present invention relates to the field of adhesive tape industry and in particular to adhesive tape base papers and adhesive tapes for packaging and office/stationery use. According to one particular embodiment, the adhesive tapes of the invention may be based on a transparent paper, wherein one side of the paper is coated with a release agent and the other side is optionally coated with a primer coating. The invention also relates to a method of producing said adhesive tape base papers and adhesive tapes and to the use thereof in packaging or as office/stationery tape.

### BACKGROUND

Majority of packaging tapes and office/stationery tapes are nowadays plastic based, not biodegradable nor compostable materials. Due to the ongoing aim to avoid the use of plastics and to fulfil the requirements of the single-use plastic ban directive, there exists a need to provide sustainable solutions for providing novel adhesive tapes with high biobased contents. Moreover, the plastic based tape known from the prior art are hard to tear and the use of a dispenser to tear or cut such tapes is mandatory. Such kind of dispensers induce additional costs for the final user. Moreover, dispensers may break or not be adapted to the dimensions of the tape.

Some fiber-based adhesive tapes have been disclosed. EP 2841516 B1 discloses a Washi tape, which is impregnated with a binder composition. JP 2000086986A discloses a glassine paper used for forming an office tape. WO 2019/096848 A1 discloses a tracing paper suitable for laminate and packaging applications. The tracing paper comprises a coating to improve transparency and to provide the tracing paper with water resistant properties.

To date, the solutions proposed in the prior art have been known to suffer from several shortcomings. Specifically, these solutions are known to provide insufficient mechanical properties and transparency making the known cellulose fiber-based tapes unsuitable for the intended purpose. Additionally, the known cellulose fiber-based adhesive tapes often require impregnation with binders or other additional chemicals to provide the required mechanical properties, such as tensile strength and internal bond strength.

To provide a sustainable, highly biobased and highly transparent adhesive tape and to overcome at least some of the drawbacks of the art, the Applicant has developed a new, cellulose fiber-based adhesive tape base paper and adhesive tape, providing a good tensile strength and excellent transparency while being suitable for recycling in the standard paper and board recycling stream.

Moreover, the new adhesive tape base paper and the adhesive tape have the advantage of being easy to tear with or without a tape dispenser. Indeed, the existing plastic-based office adhesive tape need a dispenser to be teared and sometimes, even if a dispenser is used, the existing adhesive tapes can be hard to tear.

Furthermore, the new adhesive tape base paper can be repulpable and recyclable, and preferably repulpable and recyclable in its entirety. The adhesive tape can be repulpable and recyclable as well, and in particular a release agent can be repulped as well.

### SUMMARY OF THE INVENTION

The invention is defined by the features of the independent claims. Some specific embodiments are defined in the dependent claims.

The present invention is based on the concept of providing a translucent or transparent paper comprising highly refined cellulose fibers as a cellulose fiber-based substrate of adhesive tapes. The cellulose fiber-based substrate may be coated on one side using a release agent. In some embodiments, the cellulose fiber-based substrate may be coated on the other side with a primer agent.

According to a first aspect of the present invention, there is thus provided a cellulose fiber-based translucent or transparent adhesive tape base paper, comprising cellulose fiber-based substrate comprising highly refined cellulosic fibers having pulp freeness of °SR 70-90 using the Schopper-Riegler method, said substrate having a first side and a second side opposite to the first side and a release layer on the first side of the cellulose fiber-based substrate, wherein the cellulose fiber-based substrate has an opacity index in a range of 13-40%.

According to a second aspect of the present invention, there is provided a method of producing a cellulose fiber-based adhesive tape base paper, comprising the steps of providing or producing a cellulose fiber-based substrate comprising highly refined cellulosic fibers having pulp freeness of °SR 70-90 using the Schopper-Riegler method; applying a release layer on the first side of the cellulose fiber-based substrate; and optionally applying a primer layer on the second side of the cellulose-fiber based substrate.

Embodiments of the invention comprise adhesive tapes, *i.e.* adhesive tape base papers comprising adhesive layer(s) of pressure-sensitive adhesive polymers, said adhesive layer being applied on the second side of the cellulose-fiber based substrate or on the optional primer layer.

Considerable advantages are obtained by the invention. As stated above, contrary to plastic-based adhesive tapes, the present adhesive tapes are suitable for recycling in the standard paper and board recycling streams according to EN13430. The present products have high biobased content and are industrial and home compostable.

Second, the present adhesive tapes have an excellent transparency due to the transparency of the adhesive tape base paper, which has an opacity of the same range as the cellulose fiber-based substrate.

Moreover, the present adhesive tapes do not require tape dispensers to cut clean pieces like plastic based tapes. The edge tearing resistance of this adhesive tape is low and thus enable to cut this adhesive tape without the need of a tape dispenser.

Still further, the present adhesive tapes have a good tensile strength, comparable to common plastic-based tapes. The present adhesive tapes and adhesive tape base papers also have high internal bond and strong barrier properties without impregnation of the cellulose fiber-based substrate with a binder or latex.

Further features and advantages of the present technology will appear from the following description of some embodiments.

### BRIEF DESCRIPTION OF THE DRAWINGS

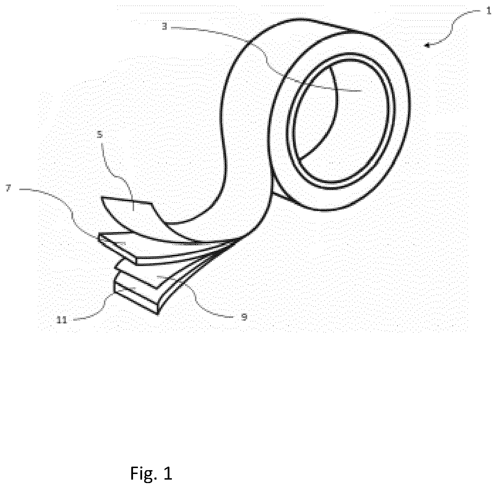

FIGURE 1 illustrates an exploded side schematic view of a tape roll according to one embodiment of the invention. The pressure sensitive adhesive tape roll (1) comprises a cellulose fiber-based substrate (7), a release layer (5), a primer layer (9) and an adhesive layer (11), wound around a core reel (3).

### EMBODIMENTS

The present invention is illustrated in a specific embodiment by Figure 1 and provides a cellulose fiber-based translucent or transparent adhesive tape base paper, comprising cellulose fiber-based substrate 7 comprising highly refined cellulosic fibers having pulp freeness of °SR 70-90 using the Schopper-Riegler method, said substrate 7 having a first side and a second side opposite to the first side; and a release layer 5 on the first side of the cellulose fiber-based substrate, wherein the cellulose fiber-based substrate 7 has an opacity index in a range of 13-40%.

In the present context, translucent or transparent in connection with a material, such as a cellulose fiber-based substrate or adhesive tape, means that said material has an opacity index in a range of 13-40%, according to NFQ 03-006 standard. Thus in some embodiments the cellulose fiber-based substrate has an opacity index in a range of 13-40%. In some embodiments the opacity index may be in a range of 15-20%.

Within this disclosure, the adhesive tape base paper comprises a cellulose fiber-based substrate and a release layer on the first side of the cellulose fiber-based substrate.

"Adhesive tape" refers to the adhesive tape base paper comprising an adhesive layer, said adhesive layer being applied on the second side of the cellulose fiber-based substrate or on the optional primer layer disposed on the second side of the cellulose fiber-based substrate before receiving the adhesive layer.

Cellulosic fibers or cellulose fibers refer to fibers composed of or derived from cellulose. The cellulosic fibers may be selected from the group consisting of kraft pulp fibers, sulfite pulp fibers, chemically treated fibers, mechanically treated pulp fibers, chemi-thermo mechanically treated pulp fibers, regenerated cellulosic fibers and combinations thereof. Typically, the cellulosic fibers comprise bleached pulp fibers. Advantageously, the use of cellulosic fibers enables the repulpability and/or the recyclability of the base paper substrate and, depending on the kind of release agent and adhesive used, of the adhesive tape. Moreover, this base paper is biobased.

As used herein, highly refined cellulosic fibers may refer to cellulosic fibers wherein the pulp freeness of the fibers may range from 70 to 90 °SR, preferably from 80 to 90 °SR, when measured using a Schopper-Riegler (SR) freeness tester. This high refining level enables the adhesive tape paper to have the desired transparency required for a use as an office tape. More particularly, a pulp freeness of from °SR 70 to 90 enables the adhesive tape base paper to have an opacity ranging from 13 to 40%.

In some embodiments, the amount of refining may also be measured based on the weight % of secondary fines in the highly refined cellulosic fibers. In some embodiments the highly refined cellulosic fibers may include greater than 35 wt.% secondary fines based on total weight of the highly refined cellulosic fibers.

Preferred, non-limiting examples of highly refined cellulosic fibers include highly refined softwood fibers, highly refined hardwood fibers, regenerated cellulose fibers such as Lyocell fibers, and combinations thereof. Preferred highly refined cellulosic fibers are bleached softwood fibers, for example northern bleached softwood kraft (NBSK) fibers and/or southern bleached softwood kraft (SBSK) fibers.

Advantageously, the proportion of highly refined cellulosic fibers of the fibers in the cellulosic fiber-based substrate 7 may be 100%. However, in some embodiments, the fibers of the cellulose fiber-based substrate 7 may comprise at most 5%, preferably at most 2% of other fibers than highly refined cellulosic fibers having pulp freeness of °SR 70-90 using the Schopper-Riegler method. Said fibers may comprise cellulosic fibers having pulp freeness lower than 70°SR using the Schopper-Riegler method and/or synthetic fibers, preferably cellulosic fibers. In case of synthetic fibers, the amount needs to be limited, on one hand to retain the biodegradability and on the other because the tape will be harder to tear if the synthetic fibers content is of more than 20%. Preferably, the amount of synthetic fibers may be at most 2%. Most preferably, the cellulose fiber-based substrate 7 consists of highly refined cellulosic fibers having pulp freeness of °SR 70-90 using the Schopper-Riegler (SR) method.

Synthetic fibers generally refer to fibers made from fiber-forming substances including polymers synthesized from chemical compounds. When present, preferred non-limiting examples of synthetic fibers may include polyamide fibers, polyester fibers, polyvinyl alcohol fibers, polylactic acid fibers, polyhydroxyalkanoate fibers, polyvalerate and polybutyrate fibers and mixtures thereof. The synthetic fibers, if used, would preferably have a length of at most 6 mm. The synthetic fibers may also have a thickness of 0.5-2.0 dtex.

In some embodiments, the highly refined cellulosic fibers may comprise softwood fibers, hardwood fibers or a combination thereof. In some embodiments, the highly refined cellulosic fibers may comprise 75-95% of softwood fibers and 5-25% hardwood fibers. In other embodiments, the highly refined cellulosic fibers may comprise 80-90% of softwood fibers and 10-20% of hardwood fibers. The softwood fibers contribute to an improvement of the mechanical properties in particular due to the high refining level. Moreover, the hardwood fibers improve the sheet formation as well as the smoothness of the paper.

In some embodiments, the proportion of highly refined cellulosic fibers may comprise 75-95%, preferably 80-90%, of softwood fibers. In some embodiments, the proportion of highly refined cellulosic fibers may comprise 5-25%, preferably 10-20% of hardwood fibers.

In some embodiments, the cellulose fiber based substrate 7 may have a basis weight of 30-60 g/m², preferably about 35-45 g/m².

In some preferred embodiments, the cellulose fiber-based substrate 7 comprises or is a calendered or supercalendered transparent or translucent cellulose fiber-based substrate or paper. Calendering refers to a finishing process in which the cellulose fiber-based substrate 7 is passed through calendar rollers at elevated temperature and pressure to smoothen the substrate.

The adhesive tape base paper may comprise a release layer 5 on first side of the cellulose fiber-based substrate 7. The release layer 5 may comprise a release agent, applied on the cellulose fiber-based substrate 7 in an amount of 0.05 to 5 g/m², preferably in an amount of 0.05 to 2 g/m², more preferably in an amount of about 0.1 g/m². Due to the smooth and closed surface of the cellulose fiber-based substrate 7 comprising highly refined cellulose fibers, the amount of release agent may be low but still highly efficient. Preferably, the adhesive tape has a release force comprised between 10 and 500 cN/cm, preferably between 50 and 250 cN/cm measured according to STM 3 FINAT Test method standard.

In embodiments, the release layer 5 may comprise a release agent selected from the group consisting of silicones, fluorinated silicones, silicone-copolymers, fluorocarbons, acrylic acetates, acrylics, styrene acrylics, vinyl acetates, polyvinyl acetates, polycarbamates, polyolefin release agents, polyurethanes, synthetic resin emulsions and combinations thereof. Preferably, the release agent is selected from the group consisting of silicones, fluorinated silicones, and silicone-copolymers.

In some embodiments, the cellulose fiber-based adhesive tape base paper comprises a primer layer 9 on the second side of the cellulose fiber-based substrate 7. The primer layer 9 comprises a primer agent applied on the cellulose fiber-based substrate 7, typically in an amount of 0.5 to 3 g/m², preferably in an amount of 1 to 2 g/m², such as about 1 g/m².

If present, the amount of the primer agent depends on the structure of the cellulose fiber-based substrate 7 and the kind of optional other agents used. Primer agents are generally used for ensuring a good compatibility/affinity between the adhesive tape cellulose fiber-based substrate 7 and the adhesive used. However, the compatibility/affinity between the present cellulose fiber-based substrate 7 or the base paper may be sufficient even without addition of a primer layer 9.

When present, the primer layer 9 typically comprises a primer agent selected from the group consisting of acrylic, styrene acrylic, polyethylene imine, synthetic resin emulsions, polyurethane, vinylic polymers, and mixture thereof.

In some embodiments, the adhesive tape base paper has a thickness of 25-60 µm, measured according to ISO 534 standard, preferably between 35 and 50 µm. In particular, such a thickness is close to the one of the existing plastic-based office tapes and also enables to have small rolls. Such thickness also enables to have a very low vision of this tape when used.

Preferably, the adhesive tape base paper has a tensile strength in machine direction (MD) of 2-3 kN/m, measured according to ISO 1924-2 standard. Such tensile strength in MD enables to unroll the adhesive tape base paper without breaks or tear. Moreover, such tensile strengths prevent possible issues at the converting step, in particular it enables to keep the machine speeds at the converting step, and in particular when applying the adhesive layer 11.

In some embodiments, the adhesive tape base paper may have a tensile strength in cross direction (CD) of 0.5-1.5 kN/m, measured according to ISO 1924-2 standard.

Preferably, the adhesive tape base paper has an edge-tear stirrup value measured according to TAPPI T 470 om-89 standard of 1-20 N/15mm, preferably between 5 and 15 N/15mm. Such edge-tear stirrup value enables a tearing of the adhesive tape base paper without the need of a tape dispenser, that is to say directly with the hand.

The adhesive tape base paper may have a porosity value. As used herein, porosity refers to porosity measured according to ISO 5636-3 standard. Therefore, as used herein, porosity refers to Bendsten porosity, which is a measure of the air flow through the pores of a media (i.e. - an air permability). The porosity of adhesive base paper and the adhesive tape is measured using a Bendtsen porosity tester, which calculates porosity by forcing air through the sheet and measuring the rate of flow, according to ISO Standard 5636-3. In preferred embodiments, the porosity value of the cellulose fiber-based adhesive tape base paper and the adhesive tape is about 0.3-0.5 ml/min.

The adhesive tape base paper may further comprise an adhesive layer 11 comprising a pressure-sensitive adhesive, preferably applied on the second side of the cellulose fiber-based substrate 7 or on the primer layer 9 in an amount of 5 to 30 g/m², preferably about 20 g/m². The adhesive layer 11 is applied to in order to obtain a final tape. Fig. 1 illustrates an example of a final tape, which comprises an adhesive layer 11 applied on the primer layer 9 disposed on the second side of the cellulose fiber-based substrate 7 before receiving the adhesive layer 11.

Preferably, the adhesive layer 11 comprises a pressure-sensitive adhesive polymer selected from the group consisting of hot melt adhesives, such as rubber based polymers, vinyl acetate and ethylene-vinyl acetate polymers, polyolefins, polyamides, polyesters, polyurethanes, styrene block copolymers, epoxy resins and combinations thereof, preferably natural rubber based polymers and acrylic based polymers.

The adhesive tape base paper of the invention has a high content of biobased materials. Typically, the content of biobased materials is at least 70%, preferably at least 80%, more preferably at least 90% by weight of the adhesive tape base paper.

Further described herein is a method of producing a cellulose fiber-based adhesive tape base paper. The method may comprise the steps of: a) providing or producing a cellulose fiber-based substrate 7 comprising highly refined cellulosic fibers having pulp freeness of °SR 70-90 using the Schopper-Riegler method, said substrate 7 having a first side and a second side opposite to the first side; b) applying a release layer 5 on the first side of the cellulose-fiber based substrate 7; and c) optionally applying a primer layer 9 on the second side of the cellulose-fiber based substrate 7.

For producing a cellulose fiber-based substrate 7, first an amount of cellulose fibers are provided. The cellulose fibers may be of any type disclosed herein including but not limited to hardwood fibers, softwood fibers, and combinations thereof. Next, the cellulose fibers may be subjected to a refining step to obtain highly refined cellulosic fibers. The refining step may include imparting energy (*i.e.* - shear, fibrillation) to the fibers in order to reduce their length and thickness. Upon completion of the refining step, the highly refined cellulosic fibers will have a refining degree, which may be measured using a Schopper-Riegler (SR) freeness tester. As stated above and in the claims, the preferred refining degree may be at least 70° with at least 75° being more preferred and at least 80° being most preferred. As disclosed above, the amount of refining may also be measured based on the weight % of secondary fines in the highly refined cellulosic fibers. When present, an amount of synthetic fibers and/or cellulose fibers having pulp freeness of less than 70°SR using the Schopper-Riegler method may be added to the highly refined cellulosic fibers upon completion of the refining step.

The cellulose fiber-based substrate 7 may be formed from an aqueous suspension of the highly refined cellulose fibers on a conventional paper machine. Advantageously, the cellulose-fiber based substrate 7 is supercalendered, either offline or online. The release layer 5 may be applied on the first side of the cellulose fiber-based substrate 7. Optionally, a primer layer 9 may be applied on the second side of the cellulose fiber-based substrate 7.

Preferably, the release layer 5 and the optional primer layer 9 are applied by a technique selected from roll-to-roll coating, blade coating, spray coating, Mayer rod coating, air knife coating, direct gravure, offset gravure, reverse gravure, deep coating, smooth roll coating, curtain coating, bead coating, slot coating, twin HSM coating, film press coating, size press coating, and/or transfer film method.

In one embodiment, the method further comprises a step of applying an adhesive layer 11 on the second side of the cellulose fiber based substrate 7 or on the primer layer 9, said adhesive layer 11 being applied by a technique selected from roll-to-roll coating, blade coating, spray coating, Mayer rod coating, air knife coating, direct gravure, offset gravure, reverse gravure, deep coating, smooth roll coating, curtain coating, bead coating, slot coating, twin HSM coating, film press coating, size press coating, and/or transfer film method.

The production of the cellulose fiber-based adhesive base paper may take place in a single production line, where the cellulose fiber-based substrate 7 is prepared from an aqueous suspension of highly refined cellulose fibers and then coated with a release layer 5.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

### EXPERIMENTAL

### Example 1. Cellulose fiber-based substrate 7

In some embodiments, the cellulose fiber-based substrate 7 may have the following characteristics:

| | **Substrate 1 (35 g)** | **Substrate 2 (40 g)** | **Substrate 3 (50 g)** | **Comparative example (film BOPP of Scotch 550 3M)** |
|---|---|---|---|---|
| **Biobased content** | 100% | 100% | 100% | 0% |
| **Repulpability** | 100% | 100% | 100% | 0% |
| **Basis Weight (g/m²)** | 35,2 | 39,7 | 50,2 | 32.2 |
| **Thickness (µm)** | 28 | 33 | 41 | 35 |
| **Load at Break MD Dry (N/15mm)** | 46,9 | 52,1 | 62,6 | NA |
| **Tensile Strength MD Dry (kN/m)** | 3,13 | 3,47 | 4,18 | 170 |
| **Elongation MD Dry (%)** | 1,9 | 2 | 2,6 | NA |
| **Load at Break MD Wet (N/15mm)** | 3,8 | 3,6 | 4,3 | NA |
| **Tensile Strength MD Wet (kN/m)** | 0,26 | 0,24 | 0,29 | NA |
| **Elongation MD Wet (%)** | 2,2 | 2,1 | 2,2 | NA |
| **Load at Break CD Dry (N/15mm)** | 14,6 | 21,1 | 24 | NA |
| **Tensile Strength CD Dry (kN/m)** | 0,98 | 1,41 | 1,6 | NA |
| **Elongation CD Dry (%)** | 5,2 | 11,6 | 11,2 | NA |
| **Load at Break CD Wet (N/15mm)** | 1,8 | 3,2 | 2,8 | NA |
| **Tensile Strength CD Wet (kN/m)** | 0,12 | 0,21 | 0,19 | NA |
| **Elongation CD Wet (%)** | 10 | 13,3 | 12,7 | NA |
| | | | | |
| **Bekk smoothness** top side (s) | 9653 | 8197 | 7408 | NA |
| **Bekk smoothness** back side (s) | 2824 | 2770 | 2739 | NA |
| **Roughness top side (s) @ 1,47 kPa** | 63 | 40 | 71 | NA |
| **Roughness back side (s) @ 1,47 kPa** | 99 | 54 | 88 | NA |
| **Gurley porosity (s)** | 1144 | 1094 | 1270 | NA |
| **Bendtsen porosity (ml/min)** | 2,5 | 6,4 | 3,3 | NA |
| **Opacity (%)** | 14.53 | 21.18 | 24.49 | <2 |
| **Hand tear (N/15mm)** | 6.51 | 7.94 | 8.98 | 52.12 |
| **Release force (cN/cm)** | 210 | 213 | 215 | NA |

The fibers in the above identified cellulose fiber-based substrates 7 are highly refined cellulosic fibers having pulp freeness of °SR 70-90 using the Schopper-Riegler method. In the examples presented here-above, the cellulose fiber-based substrate 7 do not contain the release layer 5. This cellulose fiber-based substrate 7 has been coated with an adhesive layer 11, said adhesive layer 11 being present on the second surface of the cellulose fiber-based substrate 7 in an amount of 20 g/m² in dry weight, the adhesive used being a water-based acrylic adhesive, such as for example Primal^{®} PS83D, PS83B, or PS2020 sold by Dow, or Ichemco Tackwhite^{®} A39, or A238. For the here-above measurements, the cellulose fiber-based substrate do not contain any primer layer.

The comparative example is made of a film bioriented polypropylene (BOPP) having a thickness of 35 µm used to manufacture a pressure sensitive tape sold by 3M under the name Scotch^{®} 550. This Scotch^{®} 550 tape comprises a release layer made of an acrylic copolymer and an adhesive layer made of water-based acrylic pressure sensitive adhesive, such as for example PS8913 sold and manufactured by Dow.

### Example 2. Release properties

Substrate 3 disclosed here-above has been coated with 0.3 g/m² silicone release on its first side and with 20 g/m² of two different acrylic adhesives on its second side in order to form an adhesive tape. The release properties of these adhesive tapes have been measured and are compared with the release properties of the Scotch 550^{®} manufactured and sold by 3M and with a Tesa Tape 7475, which corresponds to a reference tape for siliconized papers. The release properties have been measured based on an amended version of the Finat Test Method 3 standard simply using standard Finat test roll (2 kg) and in which the test has been conducted during only 20 minutes instead of 20 hours (as required in the standard) and without any prolonged contact with weight. As for the previous example, the adhesive layer 11 comprises a water-based acrylic adhesive, such as for example Primal^{®} PS83D, PS83B, or PS2020 sold by Dow, or Ichemco Tackwhite^{®} A39 or A238. The obtained release properties are summarized in the table below:

| Test tape Reference | Scotch 550^{®} | Tesa 7475 | Adhesive tape 1 according to the invention | Adhesive tape 2 according to the invention |
|---|---|---|---|---|
| Release 20 min (cN/cm) substrate without release coating | 212 | 782 | 156 | 90 |
| Release 20 min (cN/cm) substrate with release coating | 11 | 77 | 6 | 6 |

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in adhesive tape industry. The adhesive tapes find use in packaging and as office/stationery tapes.

### CITATION LIST

### Patent Literature

EP 2841516 B1
JP 2000086986A
WO 2019/096848 A1

Non Patent Literature

## Claims

1. A cellulose fiber-based translucent or transparent adhesive tape base paper comprising:
- cellulose fiber-based substrate (7) comprising highly refined cellulosic fibers having pulp freeness of °SR 70-90 using the Schopper-Riegler method, said substrate (7) having a first side and a second site opposite to the first side; and
- a release layer (5) on the first side of the cellulose fiber-based substrate (7);
wherein the cellulose fiber-based substrate (7) has an opacity index in a range of 13-40% according to NFQ 03-006 standard.

2. The adhesive tape base paper according to claim 1, comprising a primer layer (9) on the second side of the cellulose fiber-based substrate (7).

3. The adhesive tape base paper according to claim 2, wherein the primer layer (9) comprises a primer agent applied on the cellulose fiber-based substrate (7) in an amount of 0.5 to 3 g/m², preferably in an amount of 1 to 2 g/m².

4. The adhesive tape base paper according to any one of claims 2 or 3, wherein the primer layer (9) comprises a primer agent selected from the group consisting of acrylic, styrene acrylic, polyethylene imine, synthetic resin emulsions, polyurethane, vinylic polymers, and mixture thereof.

5. The adhesive tape base paper according to any one of the preceding claims, wherein the release layer (5) comprises a release agent, applied on the cellulose fiber-based substrate (7) in an amount of 0.05 to 5 g/m², preferably in an amount of 0.05 to 2 g/m², more preferably about 0.1 g/m².

6. The adhesive tape base paper according to any one of the preceding claims, wherein the release layer (5) comprises a release agent selected from the group consisting of silicones, fluorinated silicones, silicone-copolymers, fluorocarbons, acrylic acetates, acrylics, styrene acrylics, vinyl acetates, polyvinyl acetates, polycarbamates, polyolefin release agents, polyurethanes, synthetic resin emulsions and combinations thereof.

7. The adhesive tape base paper according to any one of the preceding claims, having at least one of the following features or combinations thereof:
- thickness of 25-60 µm, preferably a thickness of 35-50 µm, measured according to ISO 534 standard;
- tearing in CD of 120-140 Mn, preferably about 130 mN, measured according to ISO 1974 standard;
- tensile strength in MD of 2-3 kN/m, measured according to ISO 1924-2 standard.

8. The adhesive tape base paper according to any one of the preceding claims, wherein the highly refined cellulosic fibers comprise 75-95%, preferably 80-90%, of softwood fibers and 5-25%, preferably 10-20%, of hardwood fibers.

9. The adhesive tape base paper according to any one of the preceding claims, wherein the cellulose fiber-based substrate (7) comprises or is a supercalendered transparent or translucent paper.

10. The adhesive tape base paper according to any one of the preceding claims, wherein the cellulose fiber-based substrate (7) has a basis weight of 30-60 g/m², preferably about 35-45 g/m².

11. The adhesive tape base paper according to any one of the previous claims, wherein it further comprises an adhesive layer (11) comprising a pressure-sensitive adhesive polymer, applied on the second side of the cellulose fiber-based substrate (7) or on the primer layer (9), preferably in an amount of 5 to 30 g/m², more preferably about 20 g/m².

12. The adhesive tape base paper according to claim 11 wherein the adhesive layer (11) comprises a pressure-sensitive adhesive polymer selected from the group consisting of hot melt adhesives, such as rubber based polymers, vinyl acetate and ethylene-vinyl acetate polymers, polyolefins, polyamides, polyesters, polyurethanes, styrene block copolymers, epoxy resins and combinations thereof, preferably natural rubber based polymers and acrylic based polymers.

13. A method of producing a cellulose fiber-based adhesive tape base paper according to any of claims 1 to 10, comprising the following steps:
- providing or producing a cellulose fiber-based substrate (7) comprising highly refined cellulosic fibers having pulp freeness of °SR 70-90 using the Schopper-Riegler method;
- applying a release layer (5) on the first side of the cellulose-fiber based substrate (7);
- optionally applying a primer layer (9) on the second side of the cellulose-fiber based substrate (7);
wherein the release layer (5) and the optional primer layer (9) are applied by a technique selected from roll-to-roll coating, blade coating, spray coating, Mayer rod coating, air knife coating, direct gravure, offset gravure, reverse gravure, deep coating, smooth roll coating, curtain coating, bead coating, slot coating, twin HSM coating, film press coating, size press coating, and/or transfer film method.

14. The method of claim 13, which further comprises a step of applying an adhesive layer (11) on the second side of the cellulose fiber based substrate (7) or on the primer layer (9), said adhesive layer (11) being applied by a technique selected from roll-to-roll coating, blade coating, spray coating, Mayer rod coating, air knife coating, direct gravure, offset gravure, reverse gravure, deep coating, smooth roll coating, curtain coating, bead coating, slot coating, twin HSM coating, film press coating, size press coating, and/or transfer film method.

15. The use of an adhesive tape base paper according to any one of claims 1 to 12 for preparing adhesive tapes for packaging or for use as office/stationery tape.
